# EUROPEAN PATENT SPECIFICATION

(11) **EP 2 514 850 B1**
(45) Date of publication and mention of the grant of the patent: **26.07.2017**
(21) Application number: 10837321.8
(22) Date of filing: 30.08.2010
(51) Int. Cl.: C23C 4/11, C23C 4/134, C23C 4/02, C23C 4/04, C23C 4/06, F01D 5/28, C23C 28/00

(54) **METHOD FOR PRODUCING A HEAT-SHIELDING COATING, TURBINE MEMBER PROVIDED WITH SAID HEAT-SHIELDING COATING, AND GAS TURBINE**
VERFAHREN ZUR HERSTELLUNG EINER WÄRMEABSCHIRMENDEN BESCHICHTUNG, MIT DIESER WÄRMEABSCHIRMENDEN BESCHICHTUNG AUSGESTATTETES TURBINENELEMENT UND GASTURBINE DAMIT
PROCÉDÉ DE PRODUCTION D'UN REVÊTEMENT DE PROTECTION THERMIQUE, ÉLÉMENT DE TURBINE DOTÉ DUDIT REVÊTEMENT DE PROTECTION THERMIQUE ET TURBINE À GAZ

(30) Priority: 17.12.2009 JP 2009286659
(43) Date of publication of application: 24.10.2012
(73) Proprietor: Mitsubishi Hitachi Power Systems, Ltd., Yokohama 220-8401 (JP)
(72) Inventor: TORIGOE, Taiji, Tokyo 108-8215 (JP); NAGANO, Ichiro, Tokyo 108-8215 (JP); OKADA, Ikuo, Tokyo 108-8215 (JP); TSUKAGOSHI, Keizo, Tokyo 108-8215 (JP); MORI, Kazutaka, Tokyo 108-8215 (JP); INOUE, Yoshiaki, Tokyo 108-8215 (JP); UEMURA, Yoshitaka, Tokyo 108-8215 (JP); OKAJIMA, Yoshifumi, Tokyo 108-8215 (JP); KANEKO, Hideaki, Tokyo 108-8215 (JP); MEGA, Masahiko, Tokyo 108-8215 (JP)
(74) Representative: Henkel, Breuer & Partner
(86) International application number: PCT/JP2010/064691
(87) International publication number: WO 2011/074290

(56) References cited:
- EP-A1- 2 055 678
- JP-A- 9 316 665
- JP-A- H09 316 665
- JP-A- 2002 037 665
- US-A1- 2004 062 954

## Description

### {Technical Field}

The present invention relates to a process for producing a thermal barrier coating having excellent durability, and relates particularly to a process for producing a ceramic layer used as the top coat of a thermal barrier coating.

### {Background Art}

In recent years, enhancement of the thermal efficiency of thermal power generation has been investigated as a potential energy conservation measure. In order to enhance the electric power generation efficiency of a power-generating gas turbine, increasing the gas inlet temperature has been shown to be effective, and in some cases this temperature is increased to approximately 1500°C. In order to realize a power generation plant that can be operated at this type of higher temperature, the stationary blades and moving blades that constitute the gas turbine, and the walls of the combustor and the like must be formed of heat-resistant members. However, even though the material used for the turbine blades is a heat-resistant metal, it is unable to withstand the types of high temperature mentioned above, and therefore a thermal barrier coating (TBC) is formed by using a deposition process such as thermal spraying to laminate a ceramic layer composed of an oxide ceramic onto the heat-resistant metal substrate, with a metal bonding layer disposed therebetween, thereby protecting the heat-resistant metal substrate from high temperatures. ZrO₂-based materials are used for the ceramic layer, and yttria-stabilized zirconia (YSZ), which is ZrO₂ that has been partially or totally stabilized by Y₂O₃, is often used because of its comparatively low thermal conductivity and comparatively high coefficient of thermal expansion compared with other ceramic materials.

Depending on the type of gas turbine, it is thought that the turbine inlet temperature may rise to a temperature exceeding 1500°C. In those cases where the moving blades and stationary blades and the like of a gas turbine are coated with a thermal barrier coating comprising a ceramic layer composed of the above-mentioned YSZ, there is a possibility that portions of the ceramic layer may detach during operation of the gas turbine under severe operating conditions exceeding 1500°C, resulting in a loss of heat resistance. Further, recent trends towards improved environmental friendliness are spurring the development of gas turbines having even higher thermal efficiency, and it is thought that turbine inlet temperatures may reach 1600°C to 1700°C, with the surface temperature of the turbine blades reaching temperatures as high as 1300°C. Accordingly, even higher levels of heat resistance and thermal barrier properties are now being demanded of thermal barrier coatings.

The above-mentioned problem of detachment of ceramic layers composed of YSZ occurs because the crystal stability of YSZ is unsatisfactory under high-temperature conditions, and because the YSZ lacks satisfactory durability relative to large thermal stress. As a result, materials such as Yb₂O₃-doped ZrO₂ (PTL 1), Dy₂O₃-doped ZrO₂ (PTL 2), Er₂O₃-dope ZrO₂ (PTL 3), and SmYbZr₂O₇ (PTL 4) have been developed as ceramic layers that exhibit excellent crystal stability under high-temperature conditions and superior thermal durability.

As disclosed in PTL 5, ceramic layers generally employ particles having an average particle size of 10 µm to 100 µm, and are typically deposited by a thermal spraying process.

PTL 6 discloses a method for manufacturing an article for use in a high-temperature environment such as, for example, a gas turbine, comprising the steps of (a) providing a substrate, (b) selecting a desired vertical crack density for a protective coating to be deposited on the substrate, (c) providing a powder having a particle size distribution selected to provide a thermal spray coating having said desired vertical crack density, (d) applying a thermal-sprayed coating having said desired vertical crack density to said substrate, wherein said powder is used as a raw material for said coating, and (e) applying at least one intermediate layer onto said substrate prior to applying said thermal-sprayed coating.

In a preferred embodiment, the substrate comprises at least one of a silicon-containing ceramic and a silicon-containing metal alloy. The powder to be applied as a coating is preferably a ceramic powder capable of forming a thermal barrier layer to protect said substrate from a high-temperature environment, and has a particle size distribution wherein the tenth percentile diameter value is in a range from about 35 µm to about 50 µm, the fiftieth percentile diameter value is in a range from about 55 µm to about 70 µm, and the ninetieth percentile diameter value is in a range from about 85 µm to about 105 µm.

### {Citation List}

### {Patent Literature}

{PTL 1} Japanese Unexamined Patent Application, Publication No. 2003-160852 (claim 1, and paragraphs [0006] and [0027] to [0030])
{PTL 2} Japanese Unexamined Patent Application, Publication No. 2001-348655 (claims 4 and 5, and paragraphs [0010], [0011] and [0015])
{PTL 3} Japanese Unexamined Patent Application, Publication No. 2003-129210 (claim 1, and paragraphs [0013] and [0015])
{PTL 4} Japanese Unexamined Patent Application, Publication No. 2007-270245 (claim 2, and paragraphs [0028] and [0029])
{PTL 5} Japanese Unexamined Patent Application, Publication No. 2002-69607 (claim 21, and paragraphs [0053] and [0054])
{PTL 6} United States Patent Application, Publication No. 2004/0062954 A1 (claims 1, 7, 11, 13, 19 and 26)

### {Summary of Invention}

### {Technical Problem}

The thermal barrier properties of a ceramic layer can be improved by introducing pores into the ceramic layer. The porosity within a ceramic layer can be controlled by altering the thermal spraying conditions. However, the upper limit for the porosity that can be obtained using a thermal spraying process is approximately 10%. It is thought that further increasing this porosity would be effective in improving the thermal barrier properties of the ceramic layer.

The present invention has been developed in light of the above circumstances, and has an object of providing a process for producing a thermal barrier coating having an excellent thermal barrier effect and superior durability to thermal cycling, and also providing a turbine member having a thermal barrier coating that has been formed using the production process, and a gas turbine.

### {Solution to Problem}

In order to achieve the above object, the present invention provides a process for producing a thermal barrier coating, the process comprising forming a metal bonding layer on a heat-resistant alloy substrate, and forming a ceramic layer on the metal bonding layer by thermal spraying of thermal spray particles having a particle size distribution in which the 10% cumulative particle size is not less than 30 µm and not more than 100 µm.

According to the invention, the thermal spray particles have a maximum particle size of 150 µm, and comprise not more than 3% of particles having a particle size of 30 µm, and not more than 8% of particles having a particle size of 40 µm.

Conventionally, the formation of ceramic layers has generally been conducted using thermal spray particles having a particle size distribution close to a normal distribution in which the average particle size is within a range from 10 µm to 150 µm, and more typically from 10 µm to 100 µm. In contrast, in the present invention, as specified by the proportion defined above, the proportion of small particles is reduced, and the ceramic layer is formed using spray particles comprising mainly comparatively large particles. Increasing the 10% cumulative particle size for the thermal spray particles means the proportion of small particles contained within the spray particles is reduced. This results in increased porosity within the ceramic layer, and improved thermal barrier properties for the ceramic layer. Moreover, the generation of fine laminar defects within the ceramic layer is also suppressed, enabling the production of a thermal barrier coating with improved durability to thermal cycling.

The present invention also provides a turbine member comprising a thermal barrier coating formed using the above production process, and a gas turbine comprising the turbine member.

A thermal barrier coating produced using the present invention combines excellent thermal barrier properties with superior thermal cycling durability, and can therefore be applied to 1600°C class gas turbine members and the like.

### {Advantageous Effects of Invention}

According to the present invention, a ceramic layer having a higher porosity than conventional ceramic layers can be formed, enabling the production of a thermal barrier coating with excellent thermal barrier properties. Further, because fine laminar defects are reduced, the durability of the thermal barrier coating can also be improved.

### {Brief Description of Drawings}

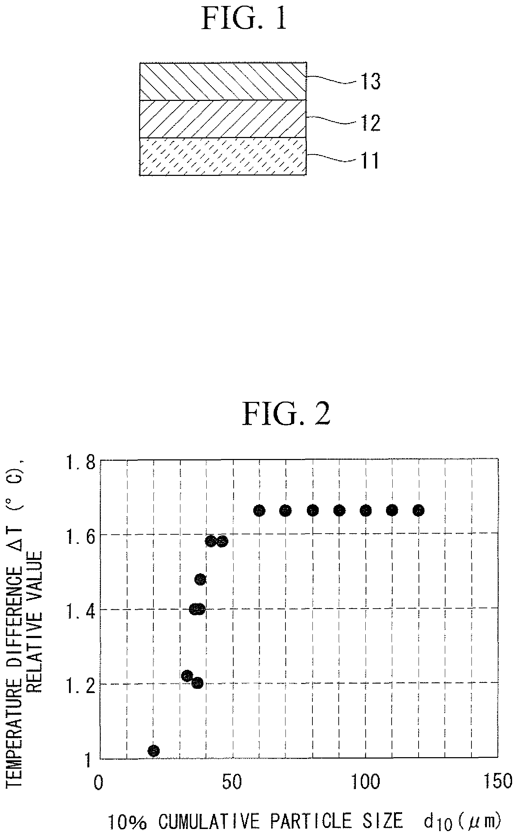

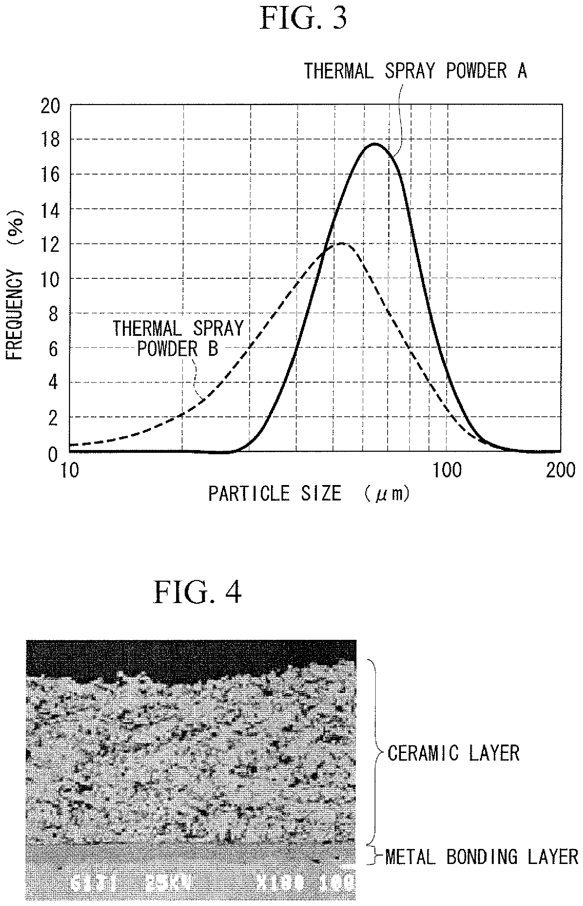

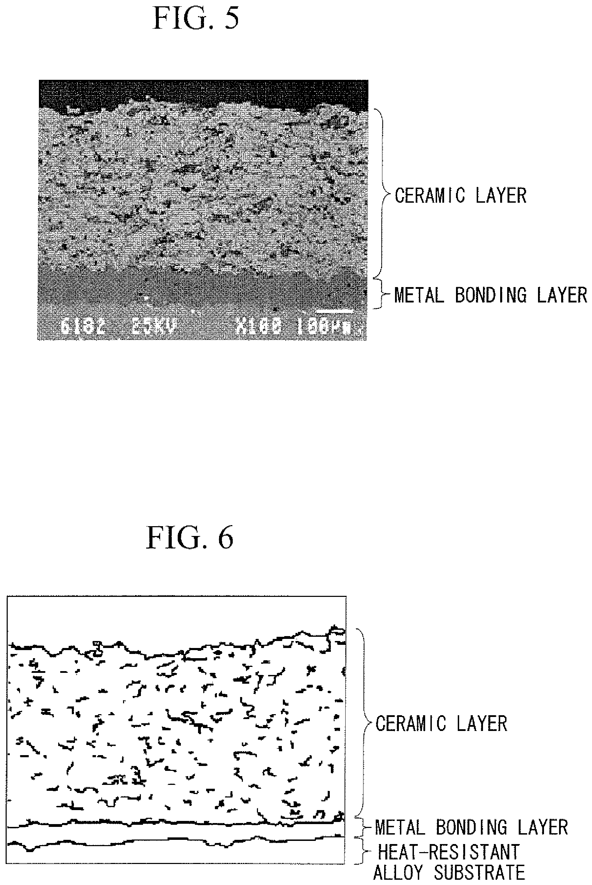

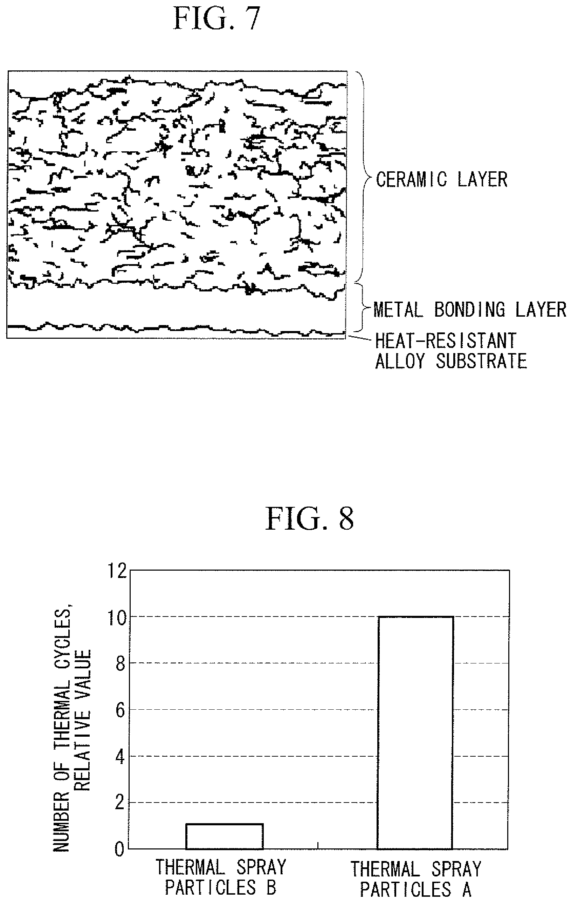

{Fig. 1} A schematic illustration of a cross-section of a turbine member comprising a thermal barrier coating.
{Fig. 2} A graph illustrating the relationship between the 10% cumulative particle size of YbSZ thermal spray particles, and the temperature difference ΔT generated inside the ceramic layer (YbSZ layer) in a thermal cycling durability test.
{Fig. 3} Particle size distributions of thermal spray particles.
{Fig. 4} An SEM photograph of a cross-section of a ceramic layer formed using thermal spray particles A.
{Fig. 5} An SEM photograph of a cross-section of a ceramic layer formed using thermal spray particles B.
{Fig. 6} An image illustrating laminar defects within the SEM photograph of Fig. 4.
{Fig. 7} An image illustrating laminar defects within the SEM photograph of Fig. 5.
{Fig. 8} A graph illustrating the thermal cycling durability of thermal barrier coatings having ceramic layers formed using thermal spray particles with different particle size distributions.

### {Description of Embodiments}

An embodiment of the present invention is described below.

Fig. 1 is a schematic illustration of a cross-section of a turbine member comprising a thermal barrier coating. A metal bonding layer 12 and a ceramic layer 13 are formed, in that order, as a thermal barrier coating on a heat-resistant alloy substrate 11 such as the moving blade or stationary blade of a turbine.

The metal bonding layer 12 is formed from an MCrAlY alloy (wherein M represents a metal element such as Ni, Co or Fe, or a combination of two or more of these elements) or the like.

Examples of the ceramic layer 13 include YbSZ (ytterbia-stabilized zirconia), YSZ (yttria-stabilized zirconia), SmYbZr₂O₇ DySZ (dysprosia-stabilized zirconia) and ErSZ (erbia-stabilized zirconia).

The ceramic layer of the present embodiment is formed by atmospheric pressure plasma spraying. The spray particles used are formed on the metal bonding layer with a particle size distribution in which the 10% cumulative particle size is not less than 30 µm and not more than 100 µm.

Fig. 2 illustrates the thermal cycling durability of thermal barrier coatings in which the ceramic layer is formed using YbSZ thermal spray particles having various values for the 10% cumulative particle size. In the figure, the horizontal axis represents the 10% cumulative particle size (d₁₀), and the vertical axis represents the temperature difference ΔT (relative value) generated inside the ceramic layer in a thermal cycling durability test. ΔT is defined as the difference between the maximum surface heating temperature and the maximum interface temperature at which the ceramic layer can withstand in excess of 1,000 thermal cycles without being destroyed. ΔT is an indicator of the durability of the ceramic layer in the thermal cycling durability test, with a larger value of ΔT indicating a higher level of durability.

To obtain the graph of Fig. 2, test pieces were prepared by using low-pressure plasma spraying to form a metal bonding layer (Ni: 32% by mass, Cr: 21% by mass, Al: 8% by mass, Y: 0.5% by mass, Co: remainder) of thickness 100 µm on a heat-resistant alloy substrate (brand name: IN-738LC) of thickness 5 mm. A thermal spray gun (F4 gun) manufactured by Sulzer Metco Ltd. was used for the thermal spraying process. The spraying conditions included a spray current of 600 (A), a spray distance of 150 (mm), a powder supply rate of 60 (g/min), an Ar/H₂ ratio of 35/7.4 (l/min), and a thickness of 0.5 (mm). The thermal cycling durability was evaluated using a laser thermal cycling test disclosed in the Publication of Japanese Patent No. 4,031,631, under conditions including a heating time of 3 minutes, a cooling time of 3 minutes, a maximum interface temperature of 900°C and various values for the maximum surface heating temperature, and the number of thermal cycles completed before detachment of the YSZ layer occurred was measured.

The particle size distribution of the thermal spray particles was measured using a laser scattering/diffraction particle size distribution analyzer (manufactured by CILAS).

As illustrated in Fig. 2, when the 10% cumulative particle size is 30 µm or greater, the value of ΔT is at least 600°C, and a ceramic layer having superior thermal cycling durability can be obtained. In other words, using thermal spray particles containing a minimal proportion of small particles improves the thermal cycling durability. Once the 10% cumulative particle size exceeds 60 µm, the thermal cycling durability becomes substantially constant. In consideration of the deposition efficiency, the 10% cumulative particle size for the spray particles used in the present embodiment is not more than 100 µm.

Fig. 3 illustrates the particle size distribution of the YbSZ thermal spray particles. In this figure, the horizontal axis represents the particle size and the vertical axis represents the frequency.

The thermal spray particles A have been classified using a 44 µm sieve to remove those particles having a small particle size. The spray particles A have a maximum particle size of not more than 150 µm, and comprise not more than 1% of particles having a particle size of 30 µm, and not more than 1% of particles having a particle size of 40 µm. The 10% cumulative particle size of the spray particles A is 42 µm.

The thermal spray particles B have not been classified to remove those particles having a small particle size. Although having a maximum particle size substantially similar to that of the spray particles A, the thermal spray particles B comprise 6% of particles having a particle size of 30 µm, and 10% of particles having a particle size of 40 µm. The 10% cumulative particle size of the spray particles B is 21 µm.

The thermal spray particles A and the thermal spray particles B were used to form ceramic layers on test pieces. The test pieces (the materials for the heat-resistant alloy substrate and the metal bonding layer) and the thermal spray conditions used for the ceramic layer were the same as those used in acquiring the data for Fig. 2.

Fig. 4 and Fig. 5 are scanning electron microscope (SEM) photographs of cross-sections of thermal barrier coatings prepared using the thermal spray particles A and the thermal spray particles B respectively. Fig. 6 and Fig. 7 are images prepared by performing image processing of the SEM photographs of Fig. 4 and Fig. 5 respectively, and illustrate fine defects (laminar defects) extending from pore origins. Measurement of the thickness of the ceramic layer within Fig. 4 and Fig. 5 revealed a thickness of 470 µm for the ceramic layer of the thermal spray particles A and a thickness of 460 µm for the ceramic layer of the thermal spray particles B.

The thermal barrier coating test pieces prepared using the thermal spray particles A and the thermal spray particles B were measured for porosity of the ceramic layer, thermal conductivity, and the value of the above-mentioned ΔT as an indicator of the thermal cycling durability. The results are shown in Table 1.

The porosity was determined by using an image processing method to analyze microscope photographs of a finely polished cross-section of the thermal barrier coating acquired for 5 random fields of view (observation length: approximately 3 mm) using an optical microscope (magnification: 100×). The thermal conductivity was measured using the laser flash method prescribed in JIS R 1611.

**{Table 1}**

| | Thermal spray particles A | Thermal spray particles B |
|---|---|---|
| Porosity (%) | 16 | 10 |
| Thermal conductivity (kcal/mh °C) | 0.9 | 1 |
| ΔT (°C) | 780 | 510 |

The number of thermal cycles (relative value) endured when the above thermal barrier coating test pieces were subjected to a laser thermal cycling test under conditions including a maximum surface heating temperature of 1500°C, a maximum interface temperature of 900°C, a heating time of 3 minutes and a cooling time of 3 minutes are illustrated in Fig. 8. In this figure, the vertical axis represents the number of thermal cycles completed before destruction of the ceramic layer, reported relative to a value of 1 for the result obtained with the thermal spray particles B.

Compared with the ceramic layer formed using the thermal spray particles B, the ceramic layer formed using the thermal spray particles A has increased porosity and a thermal conductivity that is approximately 10% lower. This increase in the porosity within the ceramic layer formed using the thermal spray particles A is due to the removal of the small particles and the resulting increase in the average particle size.

As illustrated in Fig. 6 and Fig. 7, a plurality of laminar defects were observed in the ceramic layer formed using the thermal spray particles B. It is thought that this is due to the large proportion of fine particles within the thermal spray particles B. In contrast, in the ceramic layer formed using the thermal spray particles A, it was confirmed that because the proportion of fine particles was minimal, the occurrence of laminar defects was able to be suppressed.

As illustrated in Table 1 and Fig. 8, the thermal cycling durability increased dramatically for the thermal barrier coating formed using the thermal spray particles A. This result suggests that particles having a particle size of 40 µm or less contribute to the generation of laminar defects, and also that these laminar defects have an adverse effect on the thermal cycling durability of the coating.

Even when a ceramic layer of the thermal spray particles A was formed using different thermal spray conditions (such as a different spray distance), thermal cycling durability that was substantially equivalent to that illustrated in Table 1 and Fig. 8 was obtained. This result suggests that the thermal spray conditions have almost no effect on the generation of laminar defects.

As described above, by using thermal spray particles in which the number of small particles (for example, particles having a particle size of 40 µm or less) has been dramatically reduced, the porosity of the ceramic layer can be increased, and a thermal barrier coating that exhibits superior thermal barrier properties and excellent thermal cycling durability can be obtained.

Similarly, it has been confirmed that in the cases of YSZ and SmYbZr₂O₇ and the like, by forming a thermal barrier coating using thermal spray particles from which small particles have been removed in the same manner as that described above, the porosity of the ceramic layer increases and the thermal cycling durability improves.

### {Reference Signs List}

- 11: Heat-resistant alloy substrate
- 12: Metal bonding layer
- 13: Ceramic layer

## Claims

1. A process for producing a thermal barrier coating, the process comprising:
forming a metal bonding layer on a heat-resistant alloy substrate, and
forming a ceramic layer on the metal bonding layer by thermal spraying of thermal spray particles,
wherein the thermal spray particles have a particle size distribution in which a 10% cumulative particle size is not less than 30 µm and not more than 100 µm, and wherein the thermal spray particles have a maximum particle size of not more than 150 µm, and comprise not more than 3% of particles having a particle size of 30 µm, and not more than 8% of particles having a particle size of 40 µm.

2. A turbine member, comprising a thermal barrier coating formed using the process according to claim 1.

3. A gas turbine, comprising the turbine member according to claim 2.

## Patentansprüche

1. Verfahren zur Herstellung einer wärmedämmenden Beschichtung, wobei das Verfahren umfasst:
Ausbilden einer Metallbindungsschicht auf einem wärmedämmenden Legierungssubstrat, und
Ausbilden einer Keramikschicht auf der Metallbindungsschicht durch thermisches Spritzen mit thermischen Spritzpartikeln,
wobei die thermischen Spritzpartikel eine Korngrößenverteilung aufweisen, in welcher die kumulative Korngröße bei 10% Durchgang nicht weniger als 30 µm und nicht mehr als 100 µm beträgt, und wobei die thermischen Spritzpartikel eine maximale Korngröße von nicht mehr als 150 µm aufweisen und nicht mehr als 3% an Partikeln mit einer Korngröße von 30 µm und nicht mehr als 8% an Partikeln mit einer Korngröße von 40 µm umfassen.

2. Turbinenelement, umfassend eine wärmedämmende Beschichtung, welche unter Verwendung des Verfahrens nach Anspruch 1 gebildet worden ist.

3. Gasturbine, umfassend das Turbinenelement nach Anspruch 2.

## Revendications

1. Procédé de production d'un revêtement de barrière thermique, le procédé comprenant :
la formation d'une couche de liaison de métal sur un substrat en alliage thermorésistant, et
la formation d'une couche de céramique sur la couche de liaison de métal par projection thermique de particules de projection thermique,
dans lequel les particules de projection thermique ont une distribution granulométrique dans laquelle une taille de particule cumulative de 10 % n'est pas inférieure à 30 *µ*m et pas supérieure à 100 *µ*m, et dans lequel les particules de projection thermique ont une taille de particule maximale non supérieure à 150 *µ*m, et comprennent pas plus de 3 % de particules ayant une taille de particule de 30 *µ*m, et pas plus de 8 % de particules ayant une taille de particule de 40 *µ*m.

2. Organe de turbine, comprenant un revêtement de barrière thermique formé à l'aide du procédé selon la revendication 1.

3. Turbine à gaz, comprenant l'organe de turbine selon la revendication 2.
